# EUROPEAN PATENT APPLICATION

(11) **EP 1 975 436 A1**
(43) Date of publication of application: **01.10.2008**
(21) Application number: 08033506.0
(22) Date of filing: 15.01.2008
(51) Int. Cl.: F16D 3/84, F16J 15/16

(54) **Sealed joint**

(30) Priority: 27.03.2007 GB 0705980
(71) Applicant: Rolls-Royce plc, 65 Buckingham Gate London SW1E 6AT (GB)
(72) Inventor: Holmes, Martin David, Dunstable Bedfordshire LU5 5EF (GB)
(74) Representative: Bird, Vivian John

(57) **Abstract**

A sealed joint for joining male (34) and female (36) parts which is tolerant of relative displacement of the parts. Either of the parts (34,36) may carry a sealing member (46) that sealingly contacts a sealing surface (50) provided on the other part (34,36). Either of the parts may carry a support member (48) that is in load communication with a support surface (52) provided on the other part. The sealing member (46) and support member (48) are spaced apart in the direction of relative displacement such that over the range of relative displacement the sealing member (46) remains in contact with the sealing surface (50) and the support member (48) remains in contact with the support surface (52).

## Description

The invention relates to a sealed joint.

In particular the invention relates to a sealed joint for joining male and female parts.

It is well known to employ a shaft to transmit power in the form of rotational movement from one engine component to another engine component. For example, between an engine and a gearbox, between a gearbox and a fuel, oil or water pump, or some other accessory or drivetrain component. Frequently a shroud is provided around the shaft and bolted to a casing of one or both of the components linked by the shaft. The shroud protects the shaft from environmental damage and since the shroud does not rotate, prevents damage to equipment and personnel by providing a static barrier between the shaft and the environment. Relative movement between the linked components can be accommodated by employing a two piece shroud and fixing one part of the shroud to one of the components and the remaining part of the shroud to the other component such that the two sections of the shroud are free to move relative to each other. In order to maintain environmental protection for the shaft, or if lubricated, retain lubricant, a seal is provided between the shroud parts.

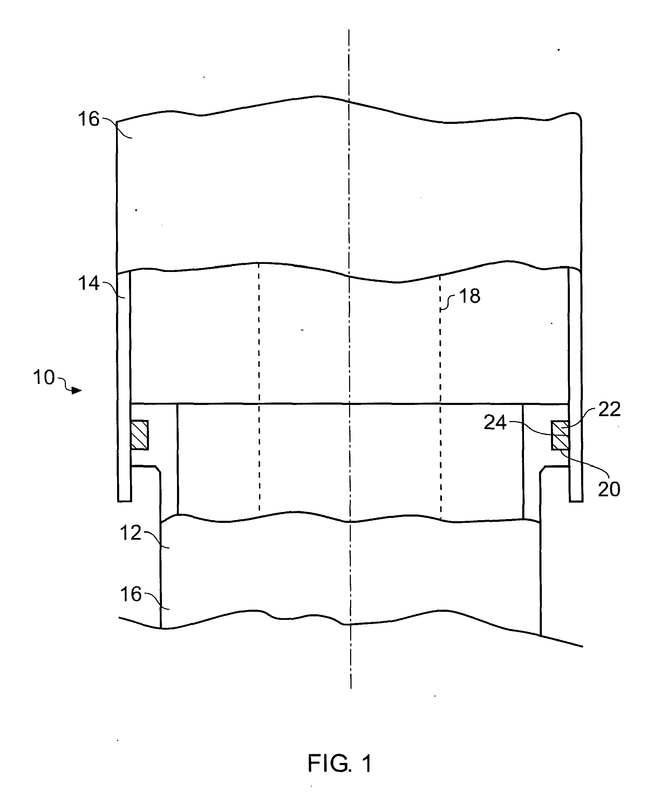

An example of such an arrangement is shown in Figure 1 (PRIOR ART), in which a sealed joint 10 is provided between a male part 12 and a female part 14 of a shroud 16. The shroud 16 surrounds a shaft 18, shown in dotted line. The male part 12 is provided with a groove 20 at one end within which is located a sealing member 22. The female part 14 is provided with a sealing surface 24 which extends over a distance greater than the expected displacement of the sealing member 22. The male part 12 extends inside the female part 14 such that the sealing member 22 is opposite, and remains in contact with, the sealing surface.

A disadvantage to this design is that the sealing member 22 is required to both seal and locate the shroud parts. In some applications the relative motion between the components will be along the axis of the shaft, radially through vibration and thermal expansion/contraction and slight rotational movement. In such applications it has been found that the material of the shroud parts, or the sealing member location features (for example, raised features forming the groove 20), will come into contact with the sealing surface. This may degrade the sealing surface by distortion or roughening and wear the sealing member. It may also generate metallic particles which will abrade the seal. Thus the seal member will wear prematurely and replacement will be required to avoid leakage. However, if the sealing surface is damaged, replacing the seal member will have limited effect, and so the sealing surface will either need to be replaced (for example, by replacing the whole shroud part) or the sealing surface will need to be restored. Either case results in a lengthy and/or costly operation for the user.

Hence a sealed joint for joining male and female parts of a shroud which reduces wear on the sealing surface but locates the shroud parts relative to one another and allows multi-dimensional relative movement of the shroud parts is highly desirable.

According to a first aspect of the present invention there is provided a sealed joint for joining male and female parts which is tolerant of relative displacement of the parts, wherein either of the parts carries a sealing member that sealingly contacts a sealing surface provided on the other part, either of the parts carries a support member that is in load communication with a support surface provided on the other part, and the sealing member and support member are spaced apart in the direction of relative displacement such that over the range of relative displacement the sealing member remains in contact with the sealing surface and the support member remains in contact with the support surface.

This arrangement is advantageous as the support member maintains location between the male and female parts, thereby maintaining a clearance and providing a load path between them, thus relieving the sealing member of this function. This means the clearance between the sealing member location features and sealing surface can be increased, thereby reducing the possibility of contact between them, and hence reducing the likelihood of damage to the sealing surface.

Since the sealing member and support member are spaced apart in the direction of relative displacement by a distance greater than the expected relative displacement, the sealing member will never come into contact with the support surface. Fretting, distortion or roughening as a result of contact between the support member and the other shroud part will be limited to the support surface, and the sealing member is only brought into contact with the sealing surface. That the support surface becomes roughened, distorted etc is largely irrelevant to the function of the support member provided the contact area remains structurally intact.

Thus the present invention provides for loads to be transmitted between the support member and surface, and a seal is maintained by the sealing member. This is in contrast with the prior art, in which the sealing member must achieve both functions. An arrangement according to the present invention will lengthen the life of the sealing member and provide for a more reliable seal over the life of the sealing member and shroud.

Preferably the sealing member is more compliant than the support member. Hence the sealing member is able to conform to the shape of the sealing surface. Also, since the support member transmits loads between the male and female parts, the sealing member can be more compliant/flexible than a sealing member of the prior art since it is not required to fulfil a load bearing function. Hence the material properties of sealing member can be chosen to be optimal for sealing rather than a compromise between sealing and load bearing.

Preferably the distance between the sealing member and the end of the male part is less than the distance between the support member and the end of the male part. That is to say, one side the sealing member is exposed to the internal cavity of the shroud, one side of the support member is exposed to the environment external to the shroud and a cavity is provided between the sealing member and support member.

The invention will now be described, by way of example only, with reference to the accompanying drawings, in which:
Figure 1 (PRIOR ART) shows a sectional view of a known sealed joint as discussed above;
Figure 2 represents an engine assembly provided with a sealed joint having a support member integral with a shroud part and a sealing member according to the present invention;
Figure 3 shows a sectional view of an alternative embodiment to that shown in Figure 2 in which the support member is provided as a separate component;
Figure 4 presents a plan view of the support member of Figure 3;
Figure 5 shows an embodiment according to the present invention in which the sealing member and support member are provided in an alternative location;
Figure 6 shows an embodiment according to the present invention in which the sealing member and support member are provided in an alternative configuration; and
Figure 7 which shows an embodiment according to the present invention in which the sealing member and support member are provided in a further alternative configuration.

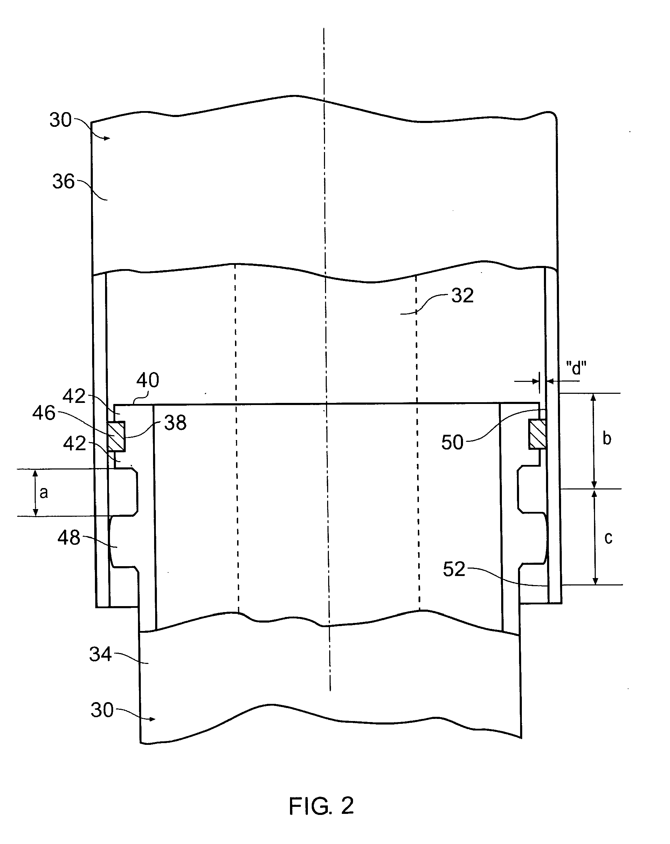

Figure 2 shows a shroud 30 according to the present invention around a shaft 32 (shown as a dotted line) which extends between a first and second component (not shown) and which, in use, transmits power in the form of a rotational movement from the first to the second component. The shroud 30 comprises a male part 34 attached to the first component and a female part 36 attached to the second component. The parts 34,36 are fixed to their respective components by some suitable means such as bolting or welding. In the embodiment shown the parts 34,36 are hollow and have a substantially circular cross-section at their interface.

The male part 34 has an external diameter which is smaller than the internal diameter of the female part 36 at their interface, such that the male part 34 can extend inside the female part 36. A first groove 38 is provided on the male part 34 at an end 40 of the male part 34 distal to the first component; that is to say substantially at the end 40 of the male part 34 furthest away from the first component. The groove 38 is formed between two raised features 42 provided on the end of the male part 34. Located within the groove 38 is a sealing member 46 which extends around the circumference of the male part 34.

The male part 34 is further provided with a raised feature extending around its circumference to form a support member 48. The support member 48 is spaced apart from the groove 38 by a distance "a", and has a barrelled profile.

A sealing surface 50 which extends over a distance "b" is provided on the internal surface of the female part 36 opposite the sealing member 46. Likewise a support surface 52 which extends over a distance "c" is provided on the internal surface of the female part 36 opposite the support member 48. The sealing member 46 contacts the sealing surface 50 along a substantially continuous contact line. The support member 48 may contact the support surface 52 along a substantially continuous contact line, but this is not essential provided the support member 48 provides an adequate area over which loads can be transmitted from one shroud part to the other. The support member 48 has a diameter larger than the largest diameter of the raised features 42 which form the groove 38, such that a clearance "d" is maintained between the raised features 42 and the sealing surface 50. The sealing member 46 extends beyond the groove 38 across the clearance "d" to sealingly contact the sealing surface 50.

The distance "a", that is the shortest distance between the closest edges of the raised feature 42 and support member 48, is governed by the expected relative displacement of the first component relative to second component such that the sealing member 46 remains in contact with the sealing surface 50 and the support member 48 remains in contact with the support surface 52. That is to say, the sealing member 46 and support member 48 are spaced apart in the direction of relative displacement of the male 34 and female 36 parts by a distance greater than the expected relative displacement of the male 34 and female 36 parts. Thus distance "a" is greater than the distance that the male part 34 is expected to move relative to the female part 36 along the sealing and support surfaces 50,52. In order that the sealing member 46 does not contact the support surface 52, the distance "a" may be at least twice the distance of the expected relative displacement.

The distances "b" and "c" may be the same as distance "a". The distances "b" and "c" may also be greater than distance "a" as shown in Figure 2, where the distances "b" and "c" are about twice the distance "a".

The expected relative displacement can be determined empirically from rig tests. Alternatively or additionally, the expected relative displacement can be determined from known dynamic models which take into account thermal expansion vibration and thrust of the components.

In the embodiment shown in Figure 2 the sealing member 46 is a separate component, and is more compliant than the support member 48 and so can conform to the sealing surface 50 along a substantially continuous contact line. However, the sealing member 46 may also be chosen to have enough strength such it aids the support member 48 in maintaining the clearance "d" between the male and female parts 34,36. The sealing member 46 may be an "o" ring.

The distance between the sealing member 46 and the end 40 of the male part 34 is less than the distance between the support member 48 and the end 40 of the male part 34. In use the shroud may contain a lubricant, and so it is beneficial to have the sealing member 46 facing the lubricant and the support member 48 facing the external environment. In this way the sealing member 46 is kept lubricated and also prevents particulates generated by contact between the sealing member 48 and sealing surface 52 from contaminating the lubricant.

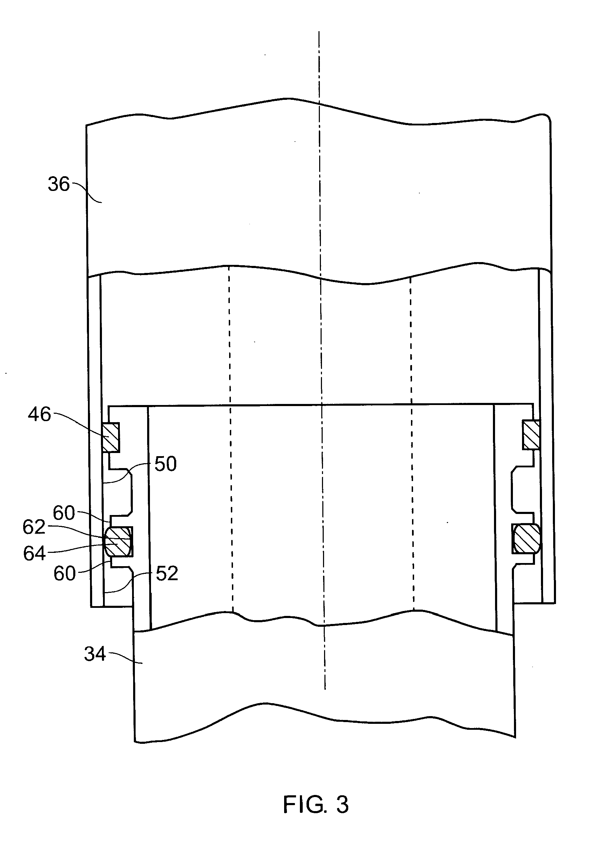

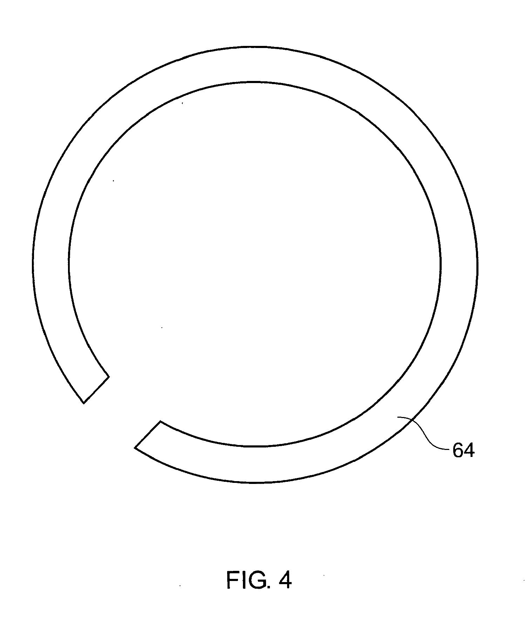

Presented in Figure 3 is an alternative embodiment of the present invention. Many of the features of the embodiment shown in Figure 2 are present in Figure 3 and thus the same integer numbers are employed to designate common features. The male member 34 of the Figure 3 embodiment is provided with raised features 60 which define a second groove 62 in place of the support member 48 of the Figure 2 embodiment. A support member 64 is located within the groove 62, the support member 64 being a separate component to the male part 34. That is to say, the support member 64 is not formed integrally with the male part 34. The support member 64 may be a continuous ring or segmented. Shown in figure 4 is a plan view of a segmented support member 64 which has an external diameter greater than the internal diameter of the sealing surface 50 of the female part 36, and hence is outwardly resilient. Alternatively the sealing member 64 may be provided in two or more segments, in which case it may or may not be resilient.

The support member 64 has the same characteristics and function of support member 48. However, since support member 64 is a separate component, it can be chosen from a wider variety of materials since it need not be made of the same material as the male member 34 or of a material suitable for joining with the material of the male member 34.

Thus the sealing member 46 and support member 64 can both be made from low friction material to reduce wear on the sealing and support surface 50,52 respectively. The sealing member 46 and support member 64 can be made from the same or different materials. One such suitable low friction material is VESPEL ® made by DuPont.

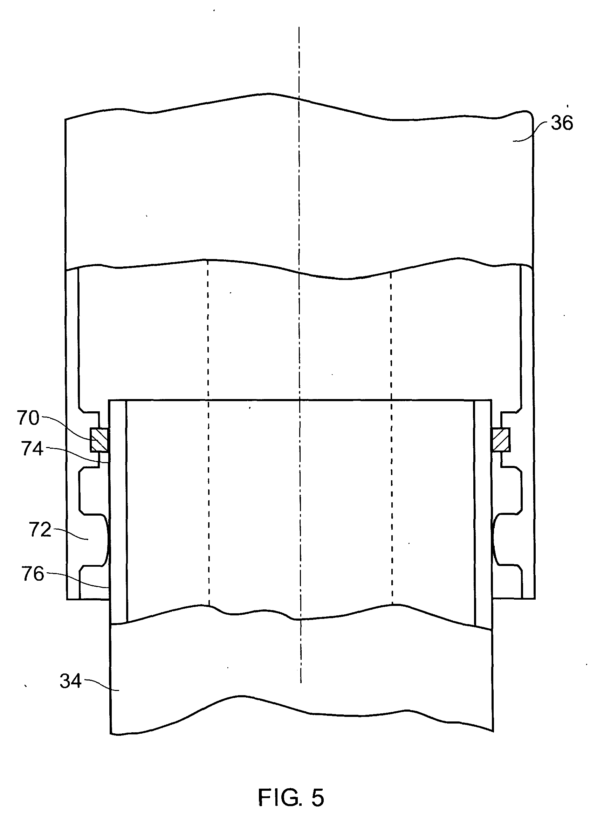

In Figure 5 an alternative embodiment is shown in which a sealing member 70 and support member 72 are provided on the female part 36, and a sealing surface 74 and support surface 76 are provided on the male member 34. In all other respects the invention is the same, and the solid support member 72 may be exchanged for a separate support member 64 as shown in Figure 3.

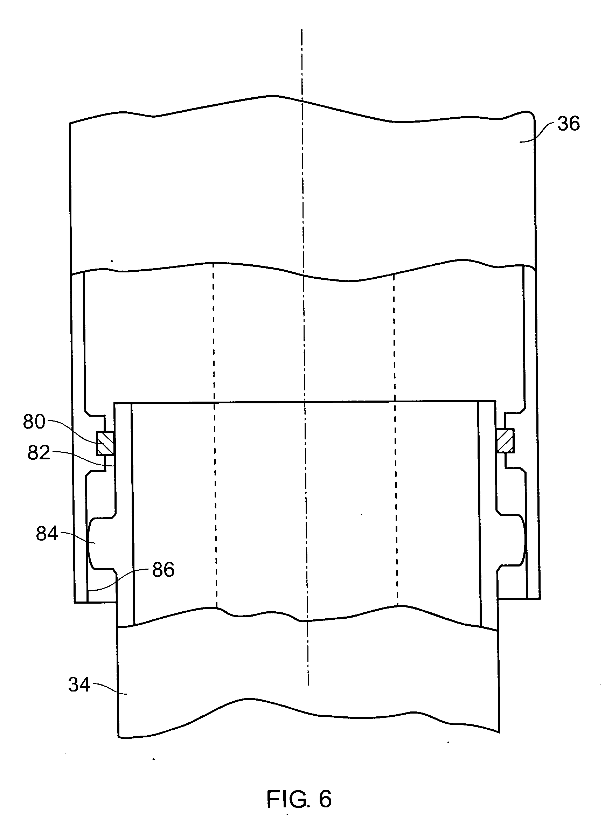

Figure 6 shows an alternative embodiment in which a sealing member 80 is provided on the female part 36 with a corresponding sealing surface 82 on the male part 34 and a support member 84 is provided on the male part 34 with a corresponding support surface 86 on the female part 36. In all other respects the invention is the same, and the solid support member 72 may be exchanged for a separate support member 64 as shown in Figure 3.

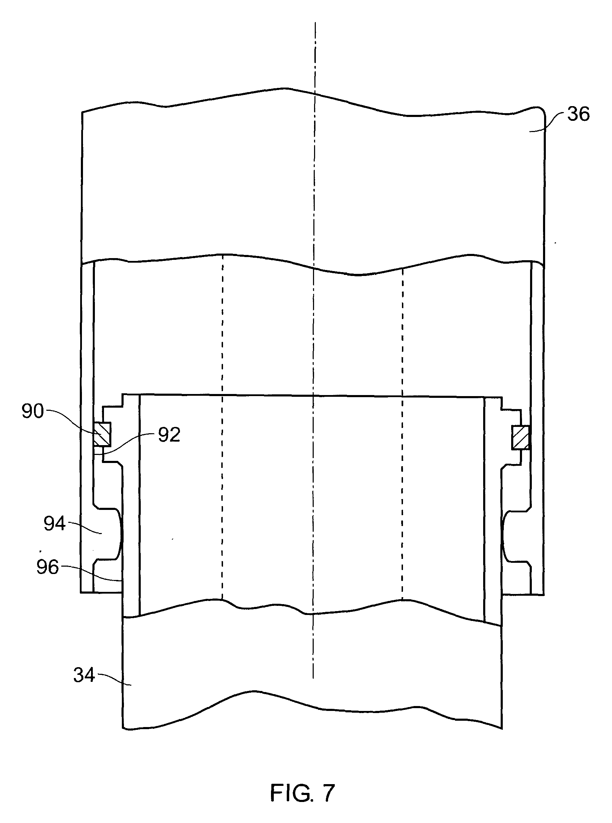

Figure 7 shows a further alternative embodiment in which a sealing member 90 is provided on the male part 34 with a corresponding sealing surface 92 on the female part 36, and a support member 94 is provided on the female part 36 with a corresponding support surface 96 on the male part 34. In all other respects the invention is the same, and the solid support member 72 may be exchanged for a separate support member 64 as shown in Figure 3.

The first component may be a gas turbine engine, and the second component may be a gearbox fitted to the gas turbine engine.

## Claims

1. A sealed joint for joining male (34) and female (36) parts which is tolerant of relative displacement of the parts (34,36),
wherein either of the parts (34,36) carries a sealing member (46,70,80,90) that sealingly contacts a sealing surface (50,74,82,92) provided on the other part (34,36),
either of the parts (34,36) carries a support member (48,64,72,84,94) that is in load communication with a support surface (52,76,86,96) provided on the other part (34,36),
and the sealing member (46,70,80,90) and support member (48,64,72,84,94) are spaced apart in the direction of relative displacement such that over the range of relative displacement the sealing member (46,70,80,90) remains in contact with the sealing surface (50,74,82,92) and the support member (48,64,72,84,94) remains in contact with the support surface (52,76,86,96).

2. A sealed joint as claimed in claim 1 wherein the sealing member (46,70,80,90) is more compliant than the support member (48,64,72,84,94).

3. A sealed joint as claimed in claim 1 or claim 2 wherein the sealing member (46,70,80,90) extends around one part (34,36) and contacts the other part (34,36) along a substantially continuous contact line.

4. A sealed joint as claimed in claim 1, 2 or 3 wherein the sealing member (46,70,80,90) is located in a first groove (38) provided in one of the parts (34,36).

5. A sealed joint as claimed in any one of claims 1 to 4 wherein the support member (48,72,84,94) is provided as at least one raised feature on the surface of one of the parts (34,36).

6. A sealed joint as claimed in any one of claims 1 to 4 wherein the support member (64) is located in a second groove (62) provided in one of the parts (34,36).

7. A sealed joint as claimed in claim 6 wherein the support member (64) is segmented.

8. A sealed joint as claimed in any one of the preceding claims wherein the support member (48,64,72,84,94) has a barrelled profile.

9. A sealed joint as claimed in any one of the preceding claims wherein a clearance is maintained between the male (34) and female parts (36) by the sealing member (46,70,80,90)

10. A sealed joint as claimed in any one of the preceding claims wherein a clearance ("d")is maintained between the male (34) and female parts (36) by the support member (48,64,72,84,94).

11. A sealed joint as claimed in any one of the preceding claims wherein the sealing member (46,70,80,90) and support member (48,64,72,84,94) are made of low friction material.

12. A sealed joint as claimed in any one of the preceding claims wherein the male (34) and female parts (36) have a circular cross section at their interface.

13. A sealed joint as claimed in any one of the preceding claims wherein the distance between the sealing member (46,70,80,90) and the end of the male part (34) is less than the distance between the support member (48,64,72,84,94) and the end of the male part (34).

14. A sealed joint as claimed in any one of the preceding claims wherein the male (34) and female parts (36) are hollow.

15. A shroud assembly for a rotatable shaft (32) comprising a sealed joint as claimed in claim 1, wherein the male (34) and female (36) parts are sections of a shroud (30).

16. A gas turbine engine comprising a shroud assembly as claimed in claim 15.
